# EUROPEAN PATENT APPLICATION

(11) **EP 4 458 637 A1**
(43) Date of publication of application: **06.11.2024**
(21) Application number: 23171404.9
(22) Date of filing: 03.05.2023
(51) Int. Cl.: B60W 60/00, B60W 40/08, B60W 50/14, B60W 50/16, B60Q 9/00, B60W 50/10

(54) **METHOD FOR ASSISTING AN OCCUPANT OF A VEHICLE SUFFERING FROM A MEDICAL CONDITION, DATA PROCESSING APPARATUS, COMPUTER PROGRAM, AND COMPUTER-READABLE STORAGE MEDIUM**

(71) Applicant: Volvo Car Corporation, 405 31 Göteborg (SE)
(72) Inventor: LENNARTSSON, Anders, 40531 Göteborg (SE); PEREZ BARRERA, Oswaldo, 40531 Göteborg (SE)
(74) Representative: Maiwald GmbH

(57) **Abstract**

The disclosure relates to a method for assisting an occupant (20) of a vehicle (18) suffering from a medical condition. The method comprises determining that the occupant (20) suffers from a medical condition. Moreover, the method comprises determining a type of the medical condition. The method additionally comprises selecting an emergency procedure based on the type of the medical condition, a vehicle condition, and an assistance time estimation. The method also comprises triggering the selected emergency procedure. Moreover, a data processing apparatus (24), a computer program (32), and a computer-readable storage medium (30) are explained.

## Description

The present disclosure relates to a method for assisting an occupant of a vehicle suffering from a medical condition.

Moreover, the present disclosure is directed to a data processing apparatus, a computer program, and a computer-readable storage medium.

It is known to monitor health parameters of a human being using a mobile electronic device such as a smart phone or a smart watch. In a vehicle, health parameters can be monitored by such a mobile electronic device carried by a user of the vehicle or by a sensor fixedly installed in the vehicle such as an interior camera. Based on monitored health parameters, a medical condition of a human being can be determined and assistance can be provided.

It is an objective of the present disclosure to provide an improved method for assisting an occupant of a vehicle suffering from a medical condition.

The problem is at least partially solved or alleviated by the subject matter of the independent claims of the present disclosure, wherein further examples are incorporated in the dependent claims.

According to a first aspect, there is provided a method for assisting an occupant of a vehicle suffering from a medical condition. The method comprises
- determining that the occupant suffers from a medical condition,
- determining a type of the medical condition,
- selecting an emergency procedure based on the type of the medical condition, a vehicle condition, and an assistance time estimation, and
- triggering the selected emergency procedure.

In this context, an emergency procedure is any type of action executed by the vehicle which is able to provide assistance to the occupant suffering from the medical condition. One or more sensors may be used for determining that the occupant suffers from a medical condition. The one or more sensors may form part of the vehicle or may form part of a mobile electronic device carried or worn by the occupant. In this context, the type of the medical condition may optionally comprise a severity indicator indicating a severity of the medical condition. Examples of medical conditions that can be determined include, but are not limited to choking, heart failure, arrhythmia and a broken arm. Due to the fact that the emergency procedure is selected based on the type of the medical condition, a vehicle condition and an assistance time estimation, a highly appropriate and helpful emergency procedure may be selected. In this context, a vehicle condition relates to a characteristic of the vehicle which has an influence on an execution of the emergency procedure. An example of a vehicle condition relates to a remaining driving range. A further example of a vehicle condition relates to a location of the vehicle. Another example of a vehicle condition relates to a driving destination.

It is understood that an assistance time estimation being indicative of a comparatively short assistance time is advantageous. Thus, in a situation in which more than one emergency procedure is possible based on the medical condition and the vehicle condition, the emergency procedure having the assistance time estimation relating to the shortest assistance time is selected.

The appropriate emergency procedure may be provided in the form of a look-up table. The look-up table comprises all available emergency procedures which are represented in the look-up table as a function of medical conditions and vehicle conditions. Moreover, assistance time estimations are provided for each emergency procedure. In an example in which the medical condition comprises choking, the emergency procedure may comprise attracting the attention from nearby road users in order to get immediate assistance. Additionally, the emergency procedure may comprise requesting a medical service to come, and waiting for the medical service. In an example in which the medical condition comprises heart failure, the emergency procedure may be the same. In an example in which the medical condition comprises a broken arm, the emergency procedure may comprise meeting up with a medical service. In this context, the vehicle may drive to a meeting location using an autonomous driving mode. In a case in which the medical condition comprises arrhythmia, the emergency procedure may comprise driving to a medical service using an autonomous driving mode of the vehicle.

It is noted that, beyond the method of the present disclosure, the emergency procedure may as well be activated manually.

The vehicle is for example an autonomous vehicle. This has the advantage that the vehicle is able to drive even if it carries a single passenger who is suffering from a medical condition.

According to an example, determining that the occupant suffers from a medical condition and/or determining the type of the medical condition comprises receiving sensor data from at least one interior sensor of the vehicle and/or from an electronic device being communicatively connected to the vehicle. Examples of interior sensors include, but are not limited to an interior camera, an interior radar unit and any other sensor being configured to provide health-related sensor data. A computer vision technique may be applied to all sensor data being provided by an interior camera or an interior radar unit. Examples of an electronic device include, but are not limited to a smart phone, a smart watch, and a health tracker device. Such sensors are known as such. Thus, the data for determining that the occupant suffers from a medical condition and/or for determining the type of the medical condition can be provided in a reliable manner.

According to an example, determining the type of the medical condition comprises determining a pain level of the occupant. In this context, the pain level may be determined based on sensor data being provided by an interior camera and/or an interior radar unit. In order to determine the pain level, a computer vision technique may be applied to the sensor data. In doing so, a facial expression of the occupant may be evaluated. Knowing the pain level facilitates determining the type of the medical condition.

According to an example, sensor data being generated by the interior sensor of the vehicle or by the electronic device being communicatively connected to the vehicle may be shared with a medical service provider. This may be done intermittently or continuously. The shared sensor data may comprise at least one of video data, audio data, or any other sensor data being indicative of a health parameter, such as heart frequency data.

In an example, the method further comprises determining whether the occupant is sleeping. Additionally or alternatively, the method further comprises triggering a wake-up procedure. Consequently, a situation in which sleeping is by mistake taken for a medical condition is avoided. In other words, the reliability of the detection of a medical condition is enhanced. Sleeping may be detected directly using a sensor of the vehicle or a sensor of the electronic device as has been explained above. Alternatively, sleeping may be detected indirectly in that a wake-up procedure is performed. In a case in which the occupant is detected to have woken up, it is inferred that the occupant has been sleeping. In a case in which the occupant is not detected to have woken up, a medical condition is inferred. Altogether, reliability of detecting a medical condition is enhanced.

According to an example, the wake-up procedure may comprise triggering at least one of an audible signal, a visible signal and a haptic signal. All of these signals are directed to the occupant. For example, a sound and/or a light may be directed to the occupant. To this end, a component of the vehicle may be used. Additionally or alternatively, a component of the electronic device carried by the occupant may be used. Further additionally or alternatively, vibration of a part of the occupant seat and/or the electronic device may be triggered. Such a wake-up procedure reliably wakes up an occupant who is sleeping.

In an example, the method further comprises requesting confirmation of a need for assistance by the occupant. In other words, the occupant is asked whether assistance is needed. In a case in which the occupant confirms the request, the selection of the emergency procedure is started. Otherwise, the method ends. Requesting confirmation further enhances the selection of an appropriate emergency procedure since unnecessary emergency procedures may be excluded.

In an example, the method further comprises triggering an information on the emergency procedure for the occupant. Using such an information, the occupant is informed on the type and progress of the emergency procedure. The triggered information may relate to the fact that the vehicle is driving to a medical service center such as a hospital using an autonomous driving mode. Alternatively, the triggered information may relates to the fact that the vehicle waits for a medical service to arrive. Consequently, based on the triggered information, the occupant suffering from a medical condition feels safe and secure.

According to an example, the emergency procedure comprises triggering contacting an emergency contact. To this end, access to one or more emergency contacts needs to be provided. An emergency contact may comprise a telephone number. Additionally or alternatively, the emergency contact may be reached via a wireless data communication protocol such as Bluetooth or Wi-Fi. In a case in which more than one emergency contacts are provided, the emergency contacts may be arranged in a contacting order. This means that the emergency contacts are contacted one after the other until one of the emergency contacts responds. As has been mentioned before, this emergency procedure is selected based on the type of the medical condition, a vehicle condition and an assistance time estimation. In other words, this emergency procedure is assigned to one or more combinations of a medical condition, a vehicle condition and an assistance time estimation. Thus, this emergency procedure is used when appropriate and helpful.

According to an example, the emergency procedure comprises requesting the vehicle to drive to a medical service center. This emergency procedure requires the vehicle to be able to drive in an autonomous driving mode. The medical service center may be a hospital or a doctor's practice. In this context, a navigation system may be used in order to determine the closest medical service center. Moreover, the navigation system may be used to estimate the time needed to get to the medical service center. To this end, one or more of the following factors may be considered: distance to the medical service center, remaining driving range, quality of roads, traffic density, road work, roadblocks. In this context, indicators on the quality of road, traffic density, road work and roadblocks may be crowd sourced from other vehicles. Optionally, available statistics for the route options may be used to determine which route can provide the safest transport. The statistics for example include accident statistics. Furthermore, determining the route to the medical service center may include consulting a database about areas of frequent disengagement of autonomous driving modes. Since the occupant suffering from the medical condition is not able to take over control of the vehicle, such areas are avoided. As has been mentioned before, this emergency procedure is selected based on a type of the medical condition, a vehicle condition and an assistance time estimation. In other words, this emergency procedure is assigned to one or more combinations of a medical condition, a vehicle condition and an assistance time estimation. Thus, this emergency procedure is used when appropriate and helpful. In an example, this emergency procedure is used if the vehicle is located relatively close to a medical service center and if the medical condition is not life-threatening. An example of a medical condition is a broken arm. Moreover, the vehicle condition needs to relate to a sufficient remaining driving range. In this case, driving to the medical service center may be the fastest way to mitigate the medical condition.

According to an example, the emergency procedure comprises requesting the vehicle to drive to a medical service meeting point. Thus, in contrast to the above emergency procedure, the vehicle is not requested to drive to the medical service center, but to a meeting point where the vehicle meets a medical service vehicle such as an ambulance or a helicopter or a drone. This is especially useful if the vehicle is located in a remote area wherein the distance to the closest medical service center is comparatively large. A navigation system may be used in order to determine the medical service meeting point. The medical service meeting point may be determined based on the type of the medical service vehicle that is met. In an example in which the medical service vehicle is a helicopter, the navigation system is used in order to determine a medical service meeting point that allows landing of a helicopter. Moreover, the medical service meeting point may be chosen such that the time to get medical assistance is minimized. As has been mentioned before, this emergency procedure is selected based on the type of a medical condition, a vehicle condition and an assistance time estimation. In other words, this emergency procedure is assigned to one or more combinations of a medical condition, a vehicle condition and an assistance time estimation. Thus, this emergency procedure is used when appropriate and helpful.

According to an example, the method further comprises providing a warning and/or a let-pass request for other road users, e.g. vehicles. Additionally or alternatively, a warning and/or a let-pass request is provided for traffic infrastructure. This may be used in combination with both triggering the vehicle to drive to a medical service center and triggering the vehicle to drive to a medical service meeting point. Due to the warning or let-pass request, other vehicles may give way to allow the vehicle to drive to the medical service center or to the medical service meeting point. This further reduces the time to get medical assistance. The same applies for traffic infrastructure such as traffic lights. Altogether, medical assistance may be provided quickly.

In an example, the emergency procedure comprises requesting the vehicle to stop and requesting a medical service vehicle to come. The medical service vehicle may be an ambulance, a helicopter and/or a drone. The drone may provide medicine and/or a medical device such as a defibrillator. This emergency procedure is appropriate, if the medical condition does not allow for transportation of the occupant before having had medical assistance. Additionally or alternatively, this emergency procedure is appropriate if the remaining driving range is so low that neither a medical service center nor a medical service meeting point can be reached. Optionally, position data describing a position of the vehicle may be sent to the emergency service. Further optionally, a warning and/or let-pass request may be provided to other vehicles such that the medical service vehicle may reach the occupant suffering from the medical condition in a comparatively short time. Additionally or alternatively, a warning and/or a let-pass request may be provided to traffic infrastructure.

In all of the above examples, the emergency procedure may comprise providing a medical history and/or providing access to a medical history for the medical service. This will allow the medical service to tailor the medical assistance to the needs and requirements of the occupant suffering from the medical condition. In a case in which the occupant suffering from the medical condition is conscious, elements of the medical history may also be taken from a dialogue with the occupant.

In an example, the emergency procedure comprises providing an assistance request to at least one other road user or pedestrian. This is useful if immediate medical assistance is required, wherein the medical assistance does not require specific medical skill, i.e. the medical assistance does not need to be provided by a medical professional. In this context, nearby vehicles and/or pedestrians may be searched, e.g. using the Bluetooth protocol. Additionally or alternatively, exterior cameras or a lidar unit of the vehicle may be used to detect other vehicles and/or pedestrians in the surroundings of the vehicles. The vehicle may send an emergency message to nearby phones or other electronic devices. Thus, medical assistance can be provided in a comparatively short time.

According to an example, a communication unit of the vehicle may be triggered to share instructions for the pedestrian or occupant of another vehicle. The instructions may be provided in visual form, e.g. on a screen unit of the vehicle. Alternatively or additionally, the instructions may be provided in audible form via at least one speaker of the vehicle. This helps the pedestrian or occupant of another vehicle to provide appropriate medical assistance.

According to a further example, unlocking of the doors is triggered. Consequently, a pedestrian and/or occupant of another vehicle has access to the vehicle and, thus, can help the occupant suffering from the medical condition.

In another example in which the vehicle condition indicates that no driving range is available and the vehicle does not have any connectivity, the vehicle may connect to any nearby communication device such as a mobile phone or other vehicle using Bluetooth or other short way connection methods and send a distress signal with information of location and status of occupant to that device for forwarding to emergency services. Thus, also in such a situation, medical assistance can be provided.

In an example, the method further comprises triggering attraction of attention of at least one other road user or pedestrian. This could be, but is not limited to, light and sound alarms. Thus, also a pedestrian and/or occupant of another vehicle who currently does not use or carry an electronic communication device, may notice the medical condition of the occupant of the vehicle. Consequently, also such people are able to provide medical assistance.

According to a further example, the method further comprises triggering establishing a speech connection between the vehicle and a medical service provider. Thus, in a case in which the occupant suffering from the medical condition is conscious, he or she can talk to the medical service provider and the medical service provider can give instructions. Additionally or alternatively, another human being who helps the occupant suffering from a medical condition, can engage in a dialogue with the medical service provider. Consequently, appropriate medical assistance can be provided.

The method of the present disclosure may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a data processing apparatus comprising means for carrying out the method of the present disclosure. Thus, an emergency procedure may be selected based on a type of a medical condition, a vehicle condition and an assistance time estimation. In other words, an appropriate and helpful emergency procedure may be triggered.

According to a third aspect, there is provided a computer program comprising instructions which, when the program is executed by a computer, cause the computer to carry out the method of the present disclosure. Thus, an emergency procedure may be selected based on a type of a medical condition, a vehicle condition and an assistance time estimation. In other words, an appropriate and helpful emergency procedure may be triggered.

According to a fourth aspect, there is provided a computer-readable storage medium comprising instructions which, when executed by a computer, cause the computer to carry out the method of the present disclosure. Thus, an emergency procedure may be selected based on the type of the medical condition, a vehicle condition and an assistance time estimation. In other words, an appropriate and helpful emergency procedure may be triggered.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the following drawings.
- Figure 1: shows a traffic situation comprising a vehicle with a data processing apparatus according to the present disclosure, a computer-readable storage medium according to the present disclosure and a computer program according to the present disclosure, wherein a method according to the present disclosure for assisting an occupant of the vehicle suffering from a medical condition is executed by the vehicle, and
- Figure 2: illustrates steps of the method for assisting an occupant of a vehicle suffering from a medical condition.

The Figures are merely schematic representations and serve only to illustrate examples of the disclosure. Identical or equivalent elements are in principle provided with the same reference signs.

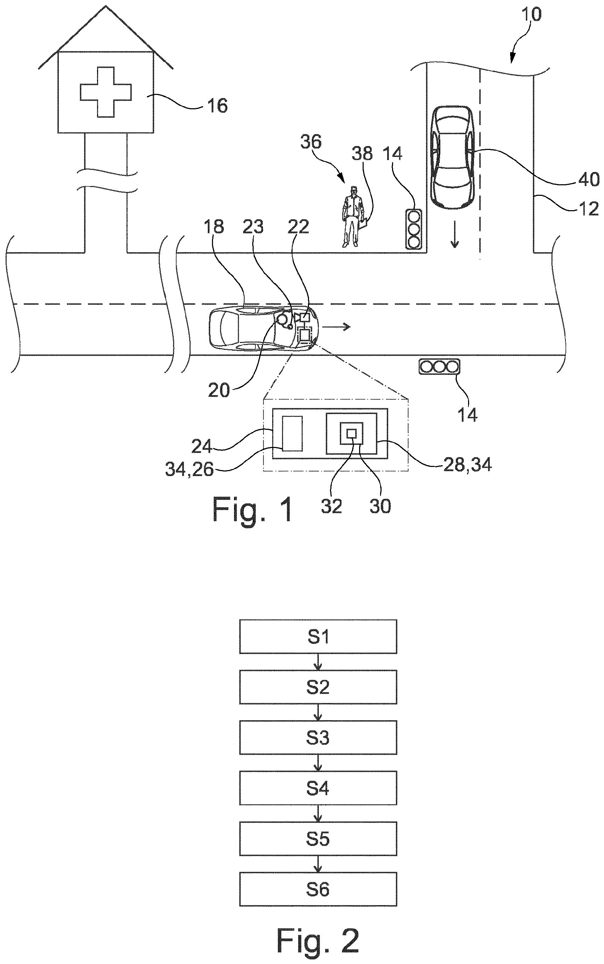

Figure 1 shows a traffic situation.

The traffic situation comprises traffic infrastructure 10. The first element of the traffic infrastructure 10 is a network 12 of roads. Moreover, the traffic infrastructure 10 comprises traffic lights 14 which are to be understood as a representative example of element of the traffic infrastructure 10 for guiding traffic.

Moreover, a medical service center 16 forms part of the traffic situation. An illustrative example of the medical service center 16 is a hospital.

A vehicle 18 is traveling along a road of the network 12 of roads. In the present example, the vehicle 18 is an autonomous vehicle. This means that the vehicle 18 offers the possibility to drive autonomously.

An occupant 20 is sitting in the vehicle 18.

The vehicle 18 comprises an interior sensor 22. In the present example, the interior sensor 22 is an interior camera which is configured to capture standing or moving images of an interior of the vehicle 18. Such images comprise a representation of the occupant 20.

Additionally, the occupant 20 is carrying an electronic device 23 being communicatively connected to the vehicle 18. In the present example, the electronic device 23 is a smart watch.

Additionally, the vehicle 18 comprises a data processing apparatus 24 which is communicatively connected to the interior sensor 22 and the electronic device 23.

The data processing apparatus 24 comprises a data processing unit 26 and a data storage unit 28.

The data storage unit 28 comprises a computer-readable storage medium 30.

On the computer-readable storage medium 30, there is provided a computer program 32.

The computer program 32, and, thus, also the computer-readable storage medium 30 comprises instructions which, when executed by the data processing unit 26 or, more generally, a computer, cause the computer or the data processing unit 26 to carry out a method for assisting the occupant 20 of the vehicle 18 suffering from a medical condition.

Thus, the data processing unit 26 and the data storage unit 28 form means 34 for carrying out the method for assisting the occupant 20 of the vehicle 18 suffering from a medical condition.

In the following, the method for assisting the occupant 20 of the vehicle 18 suffering from a medical condition will be explained in detail. To this end, four use cases will be presented.

In the first use case, the occupant 20 suffers from choking because a bite of food went down the wrong pipe. In other words, the medical condition is choking.

A first step S1 of the method comprises determining that the occupant 20 suffers from a medical condition. A second step S2 of the method comprises determining the type of the medical condition.

To this end, sensor data from the interior sensor 22 is received at the data processing apparatus 24. In the present example, the sensor data is image data showing a representation of the occupant 20.

The sensor data is analyzed using the data processing unit 26. In doing so, the representation of the occupant 20 is detected in the sensor data. Moreover, a movement of the occupant 20 is detected. The movement of the occupant 20 is analyzed and, based thereon, the data processing apparatus 24 determines that the occupant 20 suffers from choking. This outcome is supported by sensor data provided by the electronic device 23. The sensor data of the electronic device 23 may indicate a heart rate which is higher than normal.

Subsequently, in a third step S3, the occupant 20 is requested to confirm whether he or she needs assistance. To this end, a pop-up message is displayed on a screen unit in the interior of the vehicle 18.

The occupant 20 may respond to this pop-up message by pressing a touch button provided on the screen unit.

In the present example it is assumed that the occupant 20 confirms that he or she needs assistance by pushing the corresponding button.

Thereafter, in a fourth step S4, an emergency procedure is selected.

The selection of the emergency procedure respects three types of criteria.

The first type criteria relate to the medical condition. This means that the emergency procedure is selected based on the determined medical condition.

The second type criteria relate to a vehicle condition. In the present example, the vehicle condition is described by a remaining driving range.

The third type criteria relate to an assistance time estimation. The assistance time estimation relates to an estimated time until assistance is provided.

In order to be able to select the emergency procedure, a look-up table is provided on the data storage unit 28, more precisely on the computer-readable storage medium 30.

The look-up table is multidimensional and comprises a number of emergency procedures which are associated with predefined combinations of one first type criteria, one second type criteria and one third type criteria.

In the present example, the selected emergency procedure comprises three measures. The emergency procedure is triggered in a fifth step S5.

The first measure comprises providing an assistance request to a pedestrian 36.

In the present example, only one representative pedestrian 36 carrying an electronic device 38 is located close to the vehicle 18. In the present example, the electric device 38 is a smart phone. The emergency request is transmitted to the electronic device via Bluetooth. This has the effect that a pop-up message is shown on the electronic device 38 of the pedestrian 36 requesting the pedestrian's 36 assistance.

Moreover, an assistance request is provided to another road user 40 which is represented by a vehicle. Again, the vehicle is only the representative of a potential plurality of other road users.

The assistance request is transmitted from the vehicle 18 to the road user 40 via vehicle-to-vehicle (V2V) communication.

This has the effect that a pop-up message is shown on a screen unit of the road user 40 requesting assistance.

The second measure comprises triggering attraction of attention of the other road user 40 and the pedestrian 36.

To this end, the warning lights of the vehicle 18 are triggered to flash and the vehicle 18 is triggered to honk.

The third measure comprises requesting the vehicle 18 to stop and requesting a medical service vehicle to come. An example of a medical service vehicle is an ambulance.

It is noted that all these three measures are predefined in the look-up table for the medical condition of choking. Due to the fact that the pedestrian 36 and the other road user 40 are requested to help, the estimated assistance time is comparatively short.

In a sixth step S6, an information on the emergency procedure for the occupant 20 is triggered. In the present example, a pop-up message is provided on a screen unit of the vehicle 18. The pop-up message informs the occupant 20 on the above-defined measures.

In a second use case, the occupant 20 suffers from heart failure. In the following, only the differences with respect to the first use case will be explained.

As before, the medical condition of heart failure is determined based on sensor data of the interior sensor 22 and the electronic device 23. In the second use case, it is determined that the occupant 20 does not move based on the sensor data provided by the interior sensor 22, i.e. by the interior camera.

At the same time, the sensor data provided by the electronic device 23 may indicate that a pulse of the occupant 20 is not detected.

In addition to the method steps as explained in connection with the first use case, in the second use case, it is determined whether the occupant is sleeping.

To this end, a wake-up procedure is triggered. In the present example, the wake-up procedure comprises triggering vibration of a vehicle seat on which the occupant 20 is sitting. If the occupant 20 reacts to the wake-up procedure by moving, it is inferred that the occupant 20 has been sleeping. The movement of the occupant 20 may be detected using the interior sensor 22.

In the present use case, the occupant 20 is not reacting to the wake-up procedure. Consequently it is inferred that the occupant 20 suffers from a medical condition.

Beyond that, reference is made to the explanations in respect of the first use case which apply mutatis mutandis to the second use case.

In a third use case, the medical condition relates to a broken arm.

This medical condition may be determined using sensor data provided by the interior sensor 22 and applying a body pose determination method on the sensor data. More precisely, a body pose of the representation of the occupant 20 and the sensor data may be compared to stored sensor data comprising representations of healthy humans. Based thereon, an abnormality of the body pose may be detected. Consequently, a fractured bone in the relevant part of the human body may be inferred.

Again, an emergency procedure is determined based on the look-up table as mentioned above.

Moreover, a vehicle condition is considered. The vehicle condition relates to a position of the vehicle.

Based thereon, it may be determined that the fastest possibility to provide assistance is to meet a medical service vehicle at a medical service meeting point being located between the current position of the vehicle 18 and the medical service center 16. The medical service meeting point may be determined such that a traveling time for reaching the medical service meeting point for the vehicle 18 and the medical service vehicle is substantially equal.

Consequently, when triggering the emergency procedure, the vehicle 18 is triggered to autonomously drive to the medical service meeting point. The vehicle 18 will drive to the medical service meeting point using an autonomous driving mode since, due to the broken arm, the occupant 20 may not be able to drive anymore.

While traveling to the medical service meeting point, a warning and a let-pass request may be provided to other vehicles, such as the road user 40, and the traffic infrastructure 10 such as the traffic light 14. Consequently, the other vehicles and the traffic infrastructure may let pass the vehicle 18, thereby reducing the traveling time to the medical service meeting point and, thus, reducing the time for providing assistance to the occupant 20 suffering from a medical condition.

Beyond that, reference is made to the explanations in respect of the first and second use case which apply mutatis mutandis to the second use case.

In a fourth use case, the medical condition again relates to a broken arm as in the third use case.

However, in contrast to the third use case, the vehicle location indicates that the vehicle 18 is located very close to a medical service center 16.

Consequently, the fastest way to provide assistance is that the vehicle 18 drives to the medical service center 16 using the autonomous driving mode.

Thus, as part of the emergency procedure, the vehicle is triggered to drive to the medical service center 16.

As has been explained in the context of the third use case, a warning and a let pass request may be provided to other vehicles and the traffic infrastructure 10.

Beyond that, reference is made to the explanations in respect of the first to third use case which apply mutatis mutandis to the second use case.

As an option in all of the above use cases, the emergency procedure may comprise triggering contacting an emergency contact. Consequently, a person significant to the occupant 20 may be informed about the medical condition of the occupant 20.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: traffic infrastructure
- 12: network of roads
- 14: traffic light
- 16: medical service center
- 18: vehicle
- 20: occupant
- 22: interior sensor
- 23: electronic device
- 24: data processing apparatus
- 26: data processing unit
- 28: data storage unit
- 30: computer-readable storage medium
- 32: computer program
- 34: means for carrying out the method for assisting an occupant of a vehicle suffering from a medical condition
- 36: pedestrian
- 38: electronic device
- 40: road user

- S1: first step
- S2: second step
- S3: third step
- S4: fourth step
- S5: fifth step
- S6: sixth step

## Claims

1. A method for assisting an occupant (20) of a vehicle (18) suffering from a medical condition, the method comprising
- determining that the occupant (20) suffers from a medical condition (S 1),
- determining a type of the medical condition (S2),
- selecting an emergency procedure based on the type of the medical condition, a vehicle condition, and an assistance time estimation (S4), and
- triggering the selected emergency procedure (S5).

2. The method of claim 1, wherein determining that the occupant (20) suffers from a medical condition and/or determining the type of the medical condition comprises receiving sensor data from at least one interior sensor (22) of the vehicle (18) and/or from an electronic device (23) being communicatively connected to the vehicle (18).

3. The method of claim 1 or 2, further comprising determining whether the occupant (20) is sleeping and/or further comprising triggering a wake-up procedure.

4. The method of any one of the preceding claims, further comprising requesting confirmation of a need for assistance by the occupant (20) (S3).

5. The method of any one of the preceding claims, further comprising triggering an information on the emergency procedure for the occupant (20) (S6).

6. The method of any one of the preceding claims, wherein the emergency procedure comprises triggering contacting an emergency contact.

7. The method of any one of the preceding claims, wherein the emergency procedure comprises requesting the vehicle (18) to drive to a medical service center (16).

8. The method of any one of claims 1 to 6, wherein the emergency procedure comprises requesting the vehicle (18) to drive to a medical service meeting point.

9. The method of claim 7 or 8, further comprising providing a warning and/or a let-pass request for other road users (40) and/or providing a warning and/or a let-pass request for traffic infrastructure (10).

10. The method of any one of claims 1 to 6, wherein the emergency procedure comprises requesting the vehicle (18) to stop and requesting a medical service vehicle to come.

11. The method of any one of claims 1 to 6 or 10, wherein the emergency procedure comprises providing an assistance request to at least one other road user (40) or pedestrian (36).

12. The method of any one of claims 1 to 6, 10 or 11, wherein the emergency procedure comprises triggering attraction of attention of at least one other road user (40) or pedestrian (36).

13. A data processing apparatus (24) comprising means (34) for carrying out the method of any one of the preceding claims.

14. A computer program (32) comprising instructions which, when the computer program (32) is executed by a computer, cause the computer to carry out the method of claims 1 to 12.

15. A computer-readable storage medium (30) comprising instructions which, when executed by a computer, cause the computer to carry out the method of claims 1 to 12.

## Amended claims

### Amended claims in accordance with Rule 137(2) EPC.

1. A method for assisting an occupant (20) of a vehicle (18) suffering from a medical condition, the method comprising
- determining that the occupant (20) suffers from a medical condition (S1),
- determining a type of the medical condition (S2),
- selecting an emergency procedure based on the type of the medical condition, a vehicle condition, and an assistance time estimation (S4), and
- triggering the selected emergency procedure (S5),
**characterized in that** the method further comprises
- determining whether the occupant (20) is sleeping and further triggering a wake-up procedure.

2. The method of claim 1, wherein determining that the occupant (20) suffers from a medical condition and/or determining the type of the medical condition comprises receiving sensor data from at least one interior sensor (22) of the vehicle (18) and/or from an electronic device (23) being communicatively connected to the vehicle (18).

3. The method of any one of the preceding claims, further comprising requesting confirmation of a need for assistance by the occupant (20) (S3).

4. The method of any one of the preceding claims, further comprising triggering an information on the emergency procedure for the occupant (20) (S6).

5. The method of any one of the preceding claims, wherein the emergency procedure comprises triggering contacting an emergency contact.

6. The method of any one of the preceding claims, wherein the emergency procedure comprises requesting the vehicle (18) to drive to a medical service center (16).

7. The method of any one of claims 1 to 5, wherein the emergency procedure comprises requesting the vehicle (18) to drive to a medical service meeting point.

8. The method of claim 6 or 7, further comprising providing a warning and/or a let-pass request for other road users (40) and/or providing a warning and/or a let-pass request for traffic infrastructure (10).

9. The method of any one of claims 1 to 5, wherein the emergency procedure comprises requesting the vehicle (18) to stop and requesting a medical service vehicle to come.

10. The method of any one of claims 1 to 5 or 9, wherein the emergency procedure comprises providing an assistance request to at least one other road user (40) or pedestrian (36).

11. The method of any one of claims 1 to 5, 9 or 10, wherein the emergency procedure comprises triggering attraction of attention of at least one other road user (40) or pedestrian (36).

12. A data processing apparatus (24) comprising means (34) for carrying out the method of any one of the preceding claims.

13. A computer program (32) comprising instructions which, when the computer program (32) is executed by a computer, cause the computer to carry out the method of claims 1 to 11.

14. A computer-readable storage medium (30) comprising instructions which, when executed by a computer, cause the computer to carry out the method of claims 1 to 11.
